# FASCICULE DE BREVET EUROPEEN

(11) **EP 1 771 253 B1**
(45) Date de publication et mention de la délivrance du brevet: **17.09.2008**
(21) Numéro de dépôt: 05786140.3
(22) Date de dépôt: 05.07.2005
(51) Int. Cl.: B02C 23/18, C09C 3/04, C09D 7/14, C09D 1/00, C09J 11/04

(54) **PROCEDE DE BROYAGE DE MATIERES MINERALES EN PRESENCE DE LIANTS, SUSPENSIONS AQUEUSES OBTENUES ET LEURS UTILISATION**
VERFAHREN ZUM MAHLEN VON MINERALMATERIALIEN BEI VORHANDENSEIN VON BINDEMITTEL, DARAUS GEWONNENE WÄSSRIGE SUSPENSIONEN UND VERWENDUNGEN DAFÜR
METHOD FOR GRINDING MINERAL MATERIALS IN THE PRESENCE OF BINDERS, RESULTING AQUEOUS SUSPENSIONS AND USE THEREOF

(30) Priorité: 13.07.2004 FR 0407805
(43) Date de publication de la demande: 11.04.2007
(73) Titulaire: COATEX S.A.S., 69730 Genay (FR)
(72) Inventeur: SUAU, Jean-Marc, F-69480 Lucenay (FR); RUHLMANN, Denis, F-69730 Genay (FR); JACQUEMET, Christian, F-69005 Lyon (FR); MONGOIN, Jacques, F-69650 Quincieux (FR)
(74) Mandataire: Richebourg, Michel François
(86) Numéro de dépôt international: PCT/FR2005/001715
(87) Numéro de publication internationale: WO 2006/016036

(56) Documents cités:
- WO-A-93/12184
- WO-A-94/28074
- US-A- 6 103 004

## Description

La présente invention concerne le domaine des suspensions aqueuses de matières minérales broyées et leurs utilisations dans des formulations aqueuses.

L'invention concerne tout d'abord un procédé de broyage de matières minérales dans l'eau, en présence de liants.

L'invention concerne aussi les suspensions stables de matières minérales broyées dans l'eau et obtenues par le procédé selon l'invention.

L'invention concerne également l'utilisation desdites suspensions dans des formulations aqueuses, en particulier des formulations de revêtements telles que notamment des peintures aqueuses, des crépis, des encres, des enduits, des mastics, des adhésifs, des colles, et d'autres formulations aqueuses incorporant des matières minérales.

L'invention concerne enfin les formulations aqueuses obtenues selon l'invention.

Depuis longtemps, les charges minérales telles que le carbonate de calcium et le dioxyde de titane sont incorporées dans les formulations de peinture aqueuses sous forme de poudres sèches. Toutefois, une évolution récente a conduit l'homme du métier à utiliser des suspensions aqueuses de matières minérales dans ses formulations. En effet, de telles suspensions s'avèrent plus simples à l'emploi, puisqu'elles éliminent les problèmes liés à l'utilisation de matériaux pulvérulents, et facilitent les opérations de manipulation des charges par simple pompage desdites suspensions.

Néanmoins, afin de stabiliser ces suspensions, et d'éviter des problèmes de sédimentation ou d'agrégation au cours du temps, on doit avoir nécessairement recours à des agents de stabilisation plus communément appelés agents dispersants. La plupart de ces agents sont à base de monomères carboxyliques, et l'état de la technique démontre les nombreux efforts réalisés dans ce domaine. Mais cette technique a fait apparaître un nouveau problème pour l'homme du métier. En effet, ce dernier doit, afin de réguler la viscosité de la peinture qu'il formule, utiliser des agents modificateurs de rhéologie, tels que notamment des agents épaississants. Or, les interactions entre cesdits épaississants et les agents dispersants contenus dans les suspensions de charges minérales sont complexes, et peuvent conduire à des effets néfastes au niveau de la rhéologie du produit final. Ainsi, le document « Rheology of associative thickener pigment and pigmented commercial latex dispersions » (Progress in Organic Coatings, 17, (1989), pp. 155-173) s'intéresse-t-il entre autre au cas d'une suspension aqueuse de dioxyde de titane, dispersée par de l'acide polyméthacrylique et mise en présence de différents agents épaississants. Il apparaît alors que pour une concentration croissante en dispersant, l'emploi de certains épaississants du type HEUR (Hydrophobic Ethoxylated Urethane) conduit à une déstabilisation du dioxyde de titane, alors que la stabilité de la suspension est maintenue en présence d'épaississants cellulosiques. Ces phénomènes ne sont pas systématiques, mais l'état de la technique souligne l'attention particulière que l'homme du métier doit porter au choix des modificateurs de rhéologie utilisés. Cette situation est résumée par le document «Adsorption studies of associative interactions between thickener and pigment particles » (Progress in Organic Coatings, 30, (1997), pp. 161-171) : l'homme du métier est fortement incité à sélectionner de manière attentive de nouvelles combinaisons dispersants-épaississants pour valoriser leur potentiel (pp 167 introduction), en termes de stabilité de la peinture ainsi fabriquée.

De plus, continuant à utiliser des charges minérales sous formes de suspensions aqueuses stabilisées à l'aide de dispersants, l'homme du métier a cherché à développer des produits intermédiaires qui consistent en de simples mélanges de différents constituants de la peinture, la formulation de ladite peinture se résumant ensuite à l'assemblage des différents constituants, par simple mélange.

Ainsi, le document US 4 025 483 décrit un procédé de stabilisation d'une suspension aqueuse de pigments de dioxyde de titane, en commençant par mélanger ces derniers avec des particules de polymère plastique. Ces dernières sont à base de monomères éthyléniquement insaturés, ont une taille de 1 000 à 10 000 Å (de 0.1 µm à 1µm), et une température de transition vitreuse supérieure ou égale à 30°C. Il est alors indiqué que les particules composites résultantes, en suspension aqueuse, peuvent être mélangées avec des liants en vue de formuler des peintures (c 1 Il 62-66): avant la formulation de la peinture, il y a donc fabrication d'un produit intermédiaire contenant des composites à base de dioxyde de titane et de particules de polymère plastiques, un liant pour peinture, et de l'eau. Cependant, un tel procédé présente l'inconvénient de faire intervenir une étape supplémentaire qui est la fabrication de particules composites (souvent référencées dans la littérature à travers l'expression pigments plastiques). D'autre part, il s'agit d'un procédé de simple mélange, obtenu par faible apport d'énergie mécanique, ne conduisant pas à une réduction de taille des charges minérales comme lors d'un procédé de broyage. D'autre part, en se référant aux exemples, l'homme du métier comprend qu'il est indispensable d'utiliser un agent dispersant pour stabiliser la suspension initiale de matière minérale.

Le document WO 93/12183 décrit quant à lui un procédé de préparation d'une dispersion aqueuse de particules composites comprenant un latex préparé selon une technique de polymérisation en émulsion et un matériau inorganique; la dispersion ainsi obtenue peut être utilisée dans la formulation de peintures aqueuses. Les particules de latex mises en jeu ont une taille moyenne comprise entre 20 et 5 000 nm, et une température de transition vitreuse supérieure à 20°C. Le latex agit tel un liant à l'égard des particules inorganiques, conférant ainsi des propriétés d'opacité et de brillance améliorées au film de peinture sec. La charge minérale peut être notamment du dioxyde de titane. De manière plus précise, le procédé consiste à préparer deux suspensions aqueuses (l'une contenant la charge minérale, l'autre contenant le latex), puis à mélanger celles-ci. Toutefois il faut souligner que le procédé est **caractérisé en ce que** la suspension initiale de matières inorganiques est nécessairement pré dispersée grâce à un polymère ou à un copolymère de l'acide méthacrylique, ou à partir d'un de ses sels. Enfin, comme précédemment, on note que ce procédé ne consiste qu'en un mélange et non en un broyage de la matière minérale utilisée.

« Le document WO 93/12184 décrit un procédé de fabrication de particules discrètes en suspension, par mélange de 2 types de particules insolubles, tout en évitant la formation d'agrégats.
Un facteur-clé résulte du contrôle du potentiel Zéta de chaque suspension formée (page 42), et une méthode privilégiée consiste à broyer en milieu aqueux les particules insolubles du 1er et du 2ème type. L'homme de métier pourra aussi se référer utilement aux documents de portée générale cités comme art antérieur dans ce document, pages 6 à 11.

Le document US 6 103 004 décrit des particules de silice agrégées en présence de polymères organiques, ce mécanisme d'agrégation intervenant à travers une étape de séchage par pulvérisation.
Ce document ne comporte donc pas d' étape de broyage, pas plus que le cas particulier du carbonate de calcium.

L'homme de métier pourra aussi se référer utilement aux documents de portée générale cités comme art antérieur dans ce document, col 1.

Le document WO 94/28074 décrit des dispersions de pigments métalliques qui peuvent être obtenues par broyage en présence de polymères.
Le carbonate de calcium (qui est un pigment minéral) n'est donc pas discuté. »

L'homme de métier pourra aussi se référer utilement aux documents de portée générale cités comme art antérieur dans ce document, page 4.

Nous indiquons ci-dessous par commodité la liste des documents antérieurs qui sont cités respectivement dans les trois documents précités :
U.S. Patent 2 930 775 ; U.S. Patent 4 243 430 ; T.C. Patton, Paint Flow and Pigment Dispersion (Wiley Interscience, 2nd édition) (1979) ; Treatise on Coatings, Vol. III, Part 1 (Marcel Decker) (1975) ; Pigment Handbook, Vol. I (2nd édition, Wiley Interscience) (1988) ; Pigment Handbook, Vol. III (Wiley Interscience) (1973) ; Burlamacchi, et al., Colloids and Surfaces 7, 165 (1982) ; U.S. Patent 4 608 401 ; U.S. Patent 4 315 959 ; P. Godard et al. Double Liaison, No 387-388, p. II (1988) ; U.S. Patent 4 800 103 ; U.S. Patent 4 421 660 ; U.S. Patent 4 798 854 ; R. Buscall, et al., Polymer Colloids (Elsevier Applied Science Publications 1985) ; U.S. Patent 3 389 105 ; U.S. Patent 5 045 114 ; U.S. Patent 5 221 340 ; DE 12 09 108 ; DE 24 14 478 ; DE 28 31 561 ; DE 41 32 230.

L'homme de métier pourra aussi se référer utilement à l'art antérieur cité dans une demande du même Demandeur : WO 2006 / 016037 soit:
« Pigment stabilization through mixed associative thickener interactions » (Journal of Coatings Technology, 64, 807, (1992), pp. 53-61 ; « Interactions between rheology-modifying and pigment-dispersing agents » (Farbe + Lack, 100, 9, (1994), pp. 759-764; U.S. 2002 050228 ; U.S. 6 074 474 ; « Particle-size distribution of fillers and their importance in the preparation of paints » (Deutsche Farben-Zeitschrift, 20 (12), 1966, pp. 565-567 ; »

Enfin, le document WO P3/11183 décrit un procédé de préparation d'une dispersion aqueuse stable, en réalisant une suspension aqueuse de matériau inorganique et une suspension aqueuse de latex, en ajustant les valeurs des potentiels Zêta des deux suspensions selon des intervalles prédéfinis, puis en mélangeant les deux suspensions. La dispersion stable obtenue peut alors être utilisée dans la fabrication des peintures aqueuses. Les particules de latex ont une taille moyenne comprise entre 20 et 5 000 nm. La charge minérale employée peut être du dioxyde de titane, ou du carbonate de calcium. Par ailleurs, la fraction solide de la dispersion finale contenant la charge et les particules de latex est supérieure à 10 % en poids. Il apparaît ici que la stabilité est assurée via le contrôle rigoureux du potentiel Zêta des deux suspensions de départ, qui nécessite d'une part la mise en oeuvre d'un dispositif de mesure, et l'utilisation d'autre part d'un agent modifiant le potentiel de surface de la charge minérale et/ou d'un agent permettant de réguler par exemple le pH de la suspension aqueuse de liant polymérique.

Aussi, poursuivant ses recherches en vue de réaliser des suspensions stables de matières minérales en présence de liants, tout en éliminant l'emploi d'agents dispersants qui peuvent conduire à des effets néfastes au niveau de la rhéologie du produit final (par interaction avec les épaississants), la Demanderesse a-t-elle trouvé de manière surprenante un nouveau procédé de fabrication d'une suspension aqueuse de charges minérales, caractérisé en ce que lesdites charges minérales sont broyées dans l'eau en présence de liants. Le produit ainsi obtenu présente une stabilité tout à fait compatible avec son utilisation dans la formulation de peintures aqueuses.

A ce stade, la Demanderesse tient à souligner que la présente invention se distingue de l'art antérieur précédemment cité par le fait que ledit art antérieur ne révèle ni n'enseigne le procédé de broyage conduisant à la diminution de la taille des particules minérales.

De la sorte, l'homme du métier qui sait désormais que la suspension de matière minérales qu'il utilise est exempte de tout agent dispersant, peut utiliser les épaississants de son choix, sans rencontrer les anciens problèmes liés aux interactions avec les agents dispersants. De plus, la suspension ainsi fabriquée répond au souhait de l'homme du métier, en ce sens qu'elle lui fournit un produit qui contient déjà une partie du liant utilisé dans la peinture. D'autre part, et de manière tout à fait surprenante, les liants ne sont pas dégradés au cours du procédé de broyage, et remplissent précisément à ce stade de la fabrication la fonction d'agents d'aide au broyage, permettant jusqu'à la suppression totale d'agents d'aide au broyage: la Demanderesse a en effet observé une réduction notable de la taille des particules de matière minérale. Or, il est bien connu que la possibilité de choisir la taille des particules minérales, dans le cadre de la formulation d'une peinture, est d'une grande importance pour l'homme du métier. En effet, la répartition de la taille des particules influence grandement les propriétés mécaniques et optiques du film final, tel qu'enseigné dans « Particle-size distribution of fillers and their importance in the preparation of paints » (Deutsche Farben-Zeitschrift, 20 (12), 1966, pp. 565-567). Par ailleurs, le procédé selon l'invention permet l'utilisation d'une très large gamme de liants pour peintures, disponibles commercialement.

Le procédé selon l'invention permet d'obtenir également des suspensions aqueuses de matières minérales, qui lors de leurs mises en oeuvre dans les formulations de peinture, permettent d'aboutir à des formulations de peinture possédant un comportement rhéologique amélioré par rapport à celles de l'art antérieur, notamment en présentant des viscosités ICI^{™} et Stormer^{™} augmentées.

Ce comportement rhéologique amélioré présente en conséquence l'avantage d'aboutir à une meilleure qualité d'application de la peinture.

Enfin, les propriétés du liant en tant que tel sont conservées, puisque les propriétés optiques du film de peinture réalisé selon l'invention ne sont pas dégradées, tout comme les propriétés de compatibilité pigmentaire des peintures ainsi formulées.

L'invention permet donc d'obtenir des formulations aqueuses de peinture stables dans le temps, sans utiliser des agents dispersants. En outre, l'invention permet d'obtenir un produit intermédiaire sous forme d'une suspension aqueuse de matières minérales et de liants, ces derniers jouant également le rôle d'agents d'aide au broyage. A cet égard, au cours de ce procédé, on peut continuer à utiliser des agents d'aide au broyage « classiques ». Enfin, la suspension aqueuse ainsi obtenue par broyage de matières minérales dans l'eau en présence de liants présente une stabilité tout à fait compatible avec son emploi dans la formulation de peintures aqueuses. A ce titre, la Demanderesse tient à préciser que le procédé selon l'invention diffère de celui évoqué dans la demande de brevet WO 95/31507. Ce dernier document décrit la fabrication d'un concentré de pigment. Ledit concentré est obtenu par broyage d'une matière minérale colorante en présence d'un liant aqueux, et destiné à être utilisé comme base colorante. Après cette opération, la taille des pigments est inférieure à 15 µm, et leur concentration est comprise entre 35 et 65 % en poids. Or, il s'avère que la partie descriptive dudit document fait état de l'utilisation d'agent dispersant, dans une proportion comprise entre 4 et 10 % en poids. A la différence de la présente invention, il est donc indispensable d'avoir recours à une quantité importante d'agent dispersant afin de conférer une bonne stabilité à la suspension aqueuse contenant le pigment et le liant.

L'objet de l'invention est donc un procédé de broyage de matières minérales dans l'eau, en présence de liants.

Un autre objet de l'invention réside dans les suspensions stables de matières minérales broyées dans l'eau et obtenues selon ledit procédé.

Un autre objet de l'invention est l'utilisation desdites suspensions dans des formulations aqueuses, en particulier des formulations de revêtements telles que notamment des peintures aqueuses, des crépis, des encres, des enduits, des mastics, des adhésifs, des colles, et d'autres formulations aqueuses incorporant des matières minérales.

Un dernier objet de l'invention réside dans les peintures aqueuses obtenues selon l'invention.

Le procédé selon l'invention permet donc d'obtenir des suspensions aqueuses de matières minérales, sans utiliser d'agents dispersants, et présentant une rhéologie compatible avec leur utilisation dans la formulation de peintures aqueuses.

De plus, le procédé selon l'invention permet d'obtenir également des suspensions aqueuses de matières minérales, qui lors de leurs mises en oeuvre dans les formulations de peinture, permettent d'aboutir à des formulations de peinture possédant un comportement rhéologique amélioré par rapport à celles de l'art antérieur, notamment en présentant des viscosités ICI^{™} et Stormer^{™} augmentées.

Ce procédé permet également de fabriquer des produits répondant à l'attente de l'homme du métier: ils contiennent de l'eau, une ou plusieurs charges minérales, et au moins un liant.
Il permet aussi d'ajuster la finesse des matières minérales utilisées en les broyant en présence de liants : ceux-ci remplissent à ce titre la fonction d'agents d'aide au broyage.
Par ailleurs, les liants ne sont pas dégradés au cours du procédé de broyage, et les propriétés optiques du film de peinture ne sont pas altérées, de même que les propriétés de compatibilité pigmentaire des peintures ainsi formulées.
Enfin, les suspensions aqueuses de matières minérales ainsi broyées et stables dans le temps, servent à la formulation de peintures aqueuses qui présentent une très bonne stabilité, et un comportement rhéologique amélioré en vue de leur application.

Ces buts sont atteints grâce à un procédé de fabrication d'une suspension stable de matières minérales dans l'eau, caractérisé en ce que lesdites matières minérales sont broyées en présence de liants.
Le procédé est défini par les revendications 1 à 7.
La Demanderesse tient à préciser que l'opération de broyage de la substance minérale à affiner consiste à broyer la substance minérale avec un corps broyant en particules très fines dans un milieu aqueux contenant les liants.

Ainsi, à la suspension aqueuse de la substance minérale à broyer, on ajoute les liants et le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 203 681 qui décrit des éléments broyants formés 30 % à 70 % en poids d'oxyde de zirconium, 0,1 % à 5 % d'oxyde d'aluminium et de 5 à 20 % d'oxyde de silicium.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

Le temps nécessaire pour aboutir à la finesse souhaitée de la substance minérale après broyage sera défini selon la nature et la quantité des substances minérales à broyer, et selon le mode d'agitation utilisé et la température du milieu pendant l'opération de broyage.

Une autre variante du procédé se **caractérise en ce que** ledit procédé met éventuellement en oeuvre au moins un agent d'aide au broyage. Ledit agent sera choisi parmi tous les agents d'aide au broyage bien connus, et leurs mélanges.

Le procédé selon l'invention est **caractérisé en ce que** les matières minérales sont un pigment et/ou une charge minérale choisi parmi le carbonate de calcium synthétique ou naturel, les dolomies, le kaolin, le talc, le gypse, la chaux, la magnésie, le dioxyde de titane, le blanc satin, le trioxyde d'aluminium ou encore le trihydroxyde d'aluminium, le mica, les oxydes de zinc et de fer, le sulfate de baryum et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges.

De manière préférentielle, les matières minérales sont du carbonate de calcium synthétique ou naturel, du dioxyde de titane, ou leurs mélanges.

De manière plus préférentielle, les matières minérales sont un carbonate de calcium synthétique ou un carbonate de calcium naturel choisi parmi le marbre, la calcite, la craie ou leurs mélanges.

Le procédé selon l'invention est également **caractérisé en ce que** les liants sont choisis parmi les liants couramment utilisés dans les formulations aqueuses par l'homme du métier, et sont choisis notamment parmi les liants de type vinyl éthylène, vinyl versatate, styrène acrylique, styrène butadiène ou encore acrylique.

De manière préférentielle, les liants sont choisis parmi les liants de type vinylversatate et acrylique.

Le procédé selon l'invention se caractérise aussi en ce que l'on met en oeuvre au moins 15 % en poids sec de matières minérales par rapport au poids total de la suspension aqueuse, de 10 % à 50 % en poids sec de liants par rapport au poids total de la suspension aqueuse, et de 0 à 5 % en poids sec d'agent d'aide au broyage par rapport au poids total de la suspension aqueuse.

De manière préférentielle, ledit procédé se **caractérise en ce que** l'on met en oeuvre au moins 50 % en poids sec de matières minérales par rapport au poids total de la suspension aqueuse, de 10 % à 50 % en poids sec de liants par rapport au poids total de la suspension aqueuse, et de 0 à 2 % en poids sec d'agent d'aide au broyage par rapport au poids total de la suspension aqueuse.

De manière très préférentielle, ledit procédé se **caractérise en ce que** l'on met en oeuvre au moins 50 % en poids sec de matières minérales par rapport au poids total de la suspension aqueuse, de 10 % à 25 % en poids sec de liants par rapport au poids total de la suspension aqueuse, et aucun agent d'aide au broyage.

Un autre objet de l'invention réside dans les suspensions aqueuses de matières minérales broyées en présence de liants obtenues par le procédé selon l'invention, et **caractérisées en ce qu**'elles contiennent au moins 15 % en poids sec de matières minérales par rapport au poids total de la suspension aqueuse, de 10 % à 50 % en poids sec de liants par rapport au poids total de la suspension aqueuse, et de 0 à 5 % en poids sec d'agents d'aide au broyage par rapport au poids total de la suspension aqueuse.

De manière préférentielle, lesdites suspensions de matières minérales se caractérisent en ce qu'elles contiennent au moins 50 % en poids sec de matières minérales par rapport au poids total de la suspension aqueuse, de 10 % à 50 % en poids sec de liants par rapport au poids total de la suspension aqueuse, et de 0 à 2 % en poids sec d'agents d'aide au broyage par rapport au poids total de la suspension aqueuse.

De manière encore plus préférentielle, lesdites suspensions de matières minérales se **caractérisent en ce qu**'elles contiennent au moins 50 % en poids sec de matières minérales par rapport au poids total de la suspension aqueuse, de 10 % à 25 % en poids sec de liants par rapport au poids total de la suspension aqueuse, et aucun agent d'aide au broyage.

Les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 30 µm, c'est-à-dire un diamètre médian d₅₀ inférieur ou égal à 30 µm.

Dans l'intégralité de la présente demande, on détermine la granulométrie des suspensions à l'aide d'un granulomètre Mastersizer^{™} 2000 de la société MALVERN^{™}.

De manière préférentielle, les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 15 µm.

De manière encore plus préférentielle, les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 10 µm.

Enfin, de manière extrêmement préférentielle, les suspensions aqueuses de matières minérales obtenues par le procédé selon l'invention se caractérisent également en ce qu'elles présentent une granulométrie telle qu'au moins 50 % des particules de matières minérales ont un diamètre inférieur ou égal à 5 µm.

Lesdites suspensions aqueuses se caractérisent également en ce que les matières minérales sont un pigment et/ou une charge minérale choisi parmi le carbonate de calcium synthétique ou naturel, les dolomies, le kaolin, le talc, le gypse, la chaux, la magnésie, le dioxyde de titane, le blanc satin, le trioxyde d'aluminium ou encore le trihydroxyde d'aluminium, le mica, les oxydes de zinc et de fer, le sulfate de baryum et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges.

De manière préférentielle, les matières minérales sont du carbonate de calcium synthétique ou naturel, du dioxyde de titane, ou leurs mélanges.

De manière plus préférentielle, les matières minérales sont un carbonate de calcium synthétique ou un carbonate de calcium naturel choisi parmi le marbre, la calcite, la craie ou leurs mélanges.

Les suspensions aqueuses selon l'invention se caractérisent également en ce que les liants sont choisis parmi les liants couramment utilisés dans les formulations aqueuses par l'homme du métier, et sont choisis notamment parmi les liants de type vinyl éthylène, vinyl versatate, styrène acrylique, styrène butadiène ou encore acrylique.

De manière préférentielle, lesdites suspensions se **caractérisent en ce que** les liants sont choisis parmi les liants de type vinylversatate et acrylique.

Un autre objet de l'invention est l'utilisation desdites suspensions dans des formulations aqueuses, en particulier des formulations de revêtements telles que notamment des peintures aqueuses, des crépis, des encres, des enduits, des mastics, des adhésifs, des colles, et d'autres formulations aqueuses incorporant des matières minérales.

Un dernier objet de l'invention réside dans les formulations aqueuses obtenues selon l'invention.

Ainsi, les peintures aqueuses, les crépis, les encres, les enduits, les mastics, les adhésifs, les formulations aqueuses incorporant des matières minérales et les colles selon l'invention se **caractérisent en ce qu**'ils contiennent les suspensions aqueuses minérales selon l'invention broyées en présence de liants.

### Exemple 1

Cet exemple concerne la fabrication de suspensions aqueuses de matières minérales à travers un procédé de broyage, en présence de liants, selon l'invention (et éventuellement en présence d'un agent d'aide au broyage: cas de l'essai 0° 8). Il concerne aussi les suspensions de matières minérales ainsi obtenues, à partir du procédé de broyage selon l'invention.

Dans les essais n° 1 à n° 8, on utilise un carbonate de calcium qui est du marbre provenant d'Avenza (Italie), et qui présente un diamètre médian initial noté d₅₀ égal à 10 µm (50 % des particules de carbonate de calcium possèdent un diamètre inférieur ou égal à 10 µm). Il est commercialisé par la société OMYA^{™} sous le nom Omyacarb^{™} 10 AV.
- On utilise un broyeur du type Dyno-Mill^{™} à cylindre fixe et impulseur tournant, dont le corps broyant est constitué par des billes à base de zirconium de diamètre compris dans l'intervalle 0,6 millimètre à 1 millimètre.
- Le volume total occupé par le corps broyant est de 1000 centimètres cubes tandis que sa masse est de 2 700 g.
- La chambre de broyage a un volume de 1400 centimètres cubes.
- La vitesse circonférentielle du broyeur est de 10 mètres par seconde.
- La suspension de pigment est recyclée à raison de 40 litres par heure.
- La sortie du Dyno-Mill^{™} est munie d'un séparateur de mailles 200 microns permettant de séparer la suspension résultant du broyage et le corps broyant.
- La température lors de chaque essai de broyage est maintenue à environ 30°C.

On commence par mélanger dans l'eau la poudre sèche de carbonate de calcium avec le liant (et l'agent d'aide au broyage dans le cas de l'essai n° 8), le mélange étant ensuite broyé au moyen du dispositif précédemment décrit. Le temps de broyage est adapté à la granulométrie souhaitée.

Par la suite, la granulométrie des suspensions est déterminée comme suit.

Après le broyage, on récupère dans un flacon un échantillon de la suspension pigmentaire dont la granulométrie est mesurée à l'aide d'un granulomètre Mastersizer^{™} 2000 commercialisé par la société MALVERN^{™}. On détermine alors le diamètre médian d₅₀ des particules de carbonate de calcium ainsi affinées.

La viscosité Brookfield^{™} des suspensions est déterminée comme suit.

La viscosité Brookfleld^{™} de la suspension est mesurée à l'aide d'un viscosimètre Brookfield^{™} type RVT, dans le flacon non agité, à une température de 25°C et à deux vitesses de rotation de 10 et 100 tours par minute avec le mobile adéquat. La lecture est effectuée après 1 minute de rotation. On obtient ainsi 2 mesures de viscosité Brookfield^{™} respectivement notées µ₁₀ et µ₁₀₀.

Après une minute d'agitation du flacon resté au repos pendant 8 jours, la viscosité Brookfield^{™} de la suspension est mesurée selon la même méthode.

### Essai n° 1

Cet essai illustre l'invention et met en oeuvre 11,8 % en poids sec par rapport au poids total de la suspension, d'un liant qui est une émulsion vinylversatate commercialisé par la société CRAY VALLEY^{™} sous le nom Craymul^{™} 2336 XP. Il met également en oeuvre 52,6 % en poids sec par rapport au poids total de la suspension du carbonate de calcium d'Avenza, et le reste d'eau.

### Essai n° 2

Cet essai illustre l'invention et met en oeuvre 11,2 % en poids sec par rapport au poids total de la suspension, d'un liant qui est une émulsion vinylversatate commercialisé par la société CRAY VALLEY^{™} sous le nom Craymul^{™} 2336 XP. Il met également en oeuvre 50,0 % en poids sec par rapport au poids total de la suspension du carbonate de calcium d'Avenza, et le reste d'eau.

### Essai n° 3

Cet essai illustre l'invention et met en oeuvre 35,0 % en poids sec par rapport au poids total de la suspension, d'un liant qui est une résine acrylique commercialisé par la société ROHM & HAAS^{™} sous le nom Primal^{™} HG-74. Il met également en oeuvre 16,7 % en poids sec du carbonate de calcium d'Avenza par rapport au poids total de la suspension, et le reste d'eau.

### Essai n° 4

Cet essai illustre l'invention et met en oeuvre 11,8 % en poids sec par rapport au poids total de la suspension, d'un liant qui est une résine acrylique commercialisé par la société BASF^{™} sous le nom Acronal^{™} 290 D. Il met également en oeuvre 52,6 % en poids sec du carbonate de calcium d'Avenza par rapport au poids total de la suspension, et le reste d'eau.

### Essai n° 5

Cet essai illustre l'invention et met en oeuvre 22,7 % en poids sec par rapport au poids total de la suspension, d'un liant qui est une résine acrylique commercialisé par la société BASF^{™} sous le nom Acronal^{™} 290 D. Il met également en oeuvre 41,0 % en poids sec du carbonate de calcium d'Avenza par rapport au poids total de la suspension, et le reste d'eau.

### Essai n° 6

Cet essai illustre l'invention et met en oeuvre 12,6 % en poids sec par rapport au poids total de la suspension, d'un liant qui est une émulsion à base d'éthylène acétate de vinyle commercialisé par la société CELANESE^{™} sous le nom Mowilith^{™} LDM 1871. Il met également en oeuvre 52,6 % en poids sec du carbonate de calcium d'Avenza par rapport au poids total de la suspension, et le reste d'eau.

### Essai n° 7

Cet essai illustre l'invention et met en oeuvre 23,9 % en poids sec par rapport au poids total de la suspension, d'un liant qui est une émulsion à base d'éthylène acétate de vinyle commercialisé par la société CELANESE^{™} sous le nom Mowilith^{™} LDM 1871. Il met également en oeuvre 40,7 % en poids sec du carbonate de calcium d'Avenza par rapport au poids total de la suspension, et le reste d'eau.

### Essai n° 8

Cet essai illustre l'invention et met en oeuvre 16,1 % en poids sec par rapport au poids total de la suspension, d'un liant qui est une résine acrylique commercialisé par la société BASF^{™} sous le nom Acronal^{™} 290 D. Il met également en oeuvre 60,5 % en poids sec du carbonate de calcium d'Avenza par rapport au poids total de la suspension. Il met aussi en oeuvre 0,3 % en poids sec par rapport au poids total de la suspension, d'un agent d'aide au broyage qui est un polyacrylate de sodium, et le reste d'eau.

Les caractéristiques des suspensions obtenues sont rassemblées dans le tableau 1.

**Tableau 1 : caractéristiques des suspensions aqueuses de carbonate de calcium broyé selon les essais n°1 à n° 8**

| **Essai n°** | | 1 | **2** | **3** | **4** | **5** | **6** | **7** | **8** |
|---|---|---|---|---|---|---|---|---|---|
| **CaCO3** (% en poids sec) | | 52,6 | 50 | 16,7 | 52,6 | 41 | 52,6 | 40,7 | 60,5 |
| **Agent d'aide au broyage** (% en poids sec) | | 0 | 0 | 0 | 0 | 0 | 0 | 0 | 0,3 |
| **Liant** (% en poids sec) | | 11,8 | 11,2 | 35,0 | 11,8 | 22,7 | 12,6 | 23,9 | 16,1 |
| **d₅₀ (µm)** | | 5,3 | 5,3 | 2 | 4,8 | 2,2 | 4,7 | 2,1 | 5,0 |
| **Viscosité à** **T=0** | µ₁₀ (mPa.s) | 8700 | 6600 | 640 | 150 | 4840 | 1580 | 10000 | 2260 |
| | µ₁₀₀ (mPa.s) | 1690 | 1020 | 300 | 130 | 1270 | 550 | 1600 | 910 |
| **Viscosité à** **T=8 jours** | µ₁₀ (mPa.s) | 8040 | 5260 | 360 | 90 | 2650 | 240 | 3280 | 1990 |
| | µ₁₀₀ (mPa.s) | 1440 | 870 | 220 | 86 | 860 | 150 | 900 | 760 |

| | | | | | | | | | |
|---|---|---|---|---|---|---|---|---|---|
| Les pourcentages en poids sec s'entendent par rapport au poids total de la suspension. d₅₀ désigne le diamètre médian des particules de carbonate de calcium après broyage (50 % des particules ont un diamètre inférieur à cette valeur). T = 0 désigne l'instant initial auquel sont mesurées les viscosités Brookfield^{™} à 10 et 100 tours par minute, notées respectivement µ₁₀ et µ₁₀₀. T = 8 jours désigne l'instant t=8 jours, auquel sont mesurées après agitation les viscosités Brookfield^{™} à 10 et 100 tours par minute, notées respectivement µ₁₀ et µ₁₀₀. | | | | | | | | | |

Les diamètres médians correspondant aux essais n° 1 à n° 8 démontrent que, pour le procédé selon l'invention, les liants utilisés se comportent bel et bien comme des agents d'aide au broyage, au sens où on observe une diminution notable de la taille des particules de carbonate de calcium.

Enfin, on constate que chaque suspension obtenue selon l'invention est stable dans le temps.

### Exemple 2

Cet exemple concerne la fabrication de peintures aqueuses selon l'invention, à partir de suspensions aqueuses de carbonate de calcium broyé en présence de liants selon l'invention, ou à partir de poudres sèches de carbonate de calcium selon l'art antérieur.

Les peintures sont formulées par le mélange des différents constituants, selon des procédés bien connus de l'homme du métier. La Demanderesse indique que, dans les essais suivants, elle n'a indiqué que la nature des carbonates et des liants utilisés. Les peintures contiennent bien entendu un grand nombre d'autres additifs. La liste complète des constituants de chaque peinture, ainsi que leurs proportions, figurent dans les tableaux récapitulatifs.

Pour chaque peinture formulée, on détermine sa viscosité ICI^{™}, Stormer^{™} et Brookfield^{™}, selon les méthodes suivantes.

La viscosité ICI^{™} est déterminée sur un viscosimètre cône-plan, dit viscosimètre ICI^{™}, commercialisé notamment par la société ERICHSEN^{™}, selon la méthode parfaitement connue de l'homme du métier. La mesure est réalisée à 25 °C et est notée µ¹ (P).

La viscosité Stormer^{™} est déterminée sur un viscosimètre Stormer de type KU-1 commercialisé par la société Brookfield^{™}, équipé d'un système de mesures unique. La mesure est réalisée à 25 °C et notée µ^{S}(K.U).

La viscosité Brookfield^{™} des peintures est déterminée à 25°C de la même manière que celle indiquée pour l'exemple 1 dans le cas des suspensions de matières minérales. Elle est notée µ^{B}₁₀ (mPa.s) et µ^{B}₁₀₀ (mPa.s) selon qu'elle est déterminée respectivement à 10 et à 100 tours par minute.

### Essai n° 9

Cet essai concerne la formulation d'une peinture mate, selon l'art antérieur, dans laquelle le carbonate est introduit uniquement sous forme de poudre sèche.
Il s'agit ici d'un mélange de 2 carbonates de calcium qui est du marbre provenant d'Avenza (Italie), l'un possédant un diamètre médian de 5 µm et l'autre un diamètre médian de 2 µm. Ils sont commercialisés par la société OMYA^{™} sous les noms respectifs de Omyacarb^{™} 5 AV et Omyacarb^{™} 2 AV.
Le liant utilisé est une résine acrylique commercialisé par la société BASF^{™} sous le nom Acronal^{™} 290 D.

### Essai n° 10

Cet essai concerne la formulation d'une peinture mate, selon l'invention.
Une partie du carbonate de calcium est introduite sous forme de poudre sèche : il s'agit d'un carbonate de calcium qui est du marbre provenant d'Avenza (Italie), avec un diamètre médian de 2 µm. Il est commercialisé par la société OMYA^{™} sous le nom de Omyacarb^{™} 2-AV.
L'autre partie est introduite sous forme de la suspension aqueuse selon l'invention décrite dans l'essai n°4.

### Essai n° 11

Cet essai concerne la formulation d'une peinture mate, selon l'invention.
Une partie du carbonate de calcium est introduite sous forme de poudre sèche. Il s'agit d'un mélange de 2 carbonates de calcium qui est du marbre provenant d'Avenza, l'un possédant un diamètre médian de 5 µm et l'autre un diamètre médian de 2 µm. Il sont commercialisés par la société OMYA^{™} sous les noms de Omyacarb^{™} 5 AV et Omyacarb^{™} 2 AV.

L'autre partie est introduite sous forme de la suspension aqueuse selon l'invention et décrite dans l'essai n° 5.

La liste des constituants ainsi que leur proportions en poids sont indiquées dans le tableau 2, pour les peintures correspondant aux essais n° 9 à n° 11.

Pour les peintures correspondant à ces 3 essais, le formulateur a travaillé à masse constante de chaque constituant : à ce titre, la masse de carbonate de calcium est identique pour ces essais et égale à 500 g, celle de liant est identique et égale à 160 g.

**Tableau 2 : composition des peintures formulées selon les essais n° 9 à n° 11**

| Constituants | Essai n° 9 | Essai n° 10 | Essai n° 11 |
|---|---|---|---|
| | (Art Antérieur) | (Invention) | (Invention) |
| Suspension de carbonate broyé selon l'essai n°4 | 0 | 570,0 | 0 |
| Suspension de carbonate broyé selon l'essai n°5 | 0 | 0 | 351,7 |
| Omyacarb^{™} 5 AV | 300,0 | 0 | 300,0 |
| Omyacarb^{™} 2 AV | 200,0 | 200,0 | 55,9 |
| Tiona^{™} RL 68 | 80,0 | 80,0 | 80,0 |
| Eau (ajoutée en plus) | 209,3 | 74,3 | 161,7 |
| Acronal^{™} 290 D | 160,0 | 25,0 | 0 |
| Coatex^{™} P90 | 4,0 | 4,0 | 4,0 |
| Mergal^{™} K6N | 2,0 | 2,0 | 2,0 |
| Nopco^{™} NDW | 2,0 | 2,0 | 2,0 |
| Butyldiglycol | 10,0 | 10,0 | 10,0 |
| White Spirit | 10,0 | 10,0 | 10,0 |
| Ammoniaque | 2,7 | 2,7 | 2,7 |
| Coatex Rheo 2000^{™} | 20,0 | 20,0 | 20,0 |
| Total | 1000,0 | 1000,0 | 1000,0 |

| | | | |
|---|---|---|---|
| Les chiffres désignent des masses en grammes. Tiona^{™} RL 68 désigne du dioxyde de titane commercialisé par la société MILLENNIUM^{™} Coatex^{™} P90 est un dispersant polyacrylique commercialisé par la société COATEX^{™} Mergal^{™} K6N est un bactéricide commercialisé par la société TROY^{™} Nopco^{™} NDW est un agent anti-mousse commercialisé par la société COGNIS^{™} Coatex Rheo 2000^{™} est un épaississant associatif commercialisé par la société COATEX^{™} | | | |

Les valeurs des viscosités ICI^{™}, Stormer^{™} et Brookfield^{™}, mesurées à différents instants, pour les peintures formulées lors des essais n°9 à n°11 sont résumées dans le tableau 2 bis.

**Tableau 2 bis : viscosités mesurées sur les peintures formulées selon les essais n° 9 à n° 11**

| **Viscosités** | | **Essai n° 9** | **Essai n° 10** | **Essai n° 11** |
|---|---|---|---|---|
| | | **(Art Antérieur)** | **(Invention)** | **(Invention)** |
| T = 0 | µ^{I} (P) | 2,2 | 2,4 | 2,6 |
| | µ^{S}(K.U) | 87 | 90 | 90 |
| | µ^{B}₁₀(mPa.s) | 4400 | 4800 | 4900 |
| | µ^{B}₁₀₀(mPa.s) | 1590 | 1690 | 1710 |
| T = 24 heures | µ^{I} (P) | 2,3 | 2,6 | 2,6 |
| | µ^{S}(K.U) | 89 | 95 | 98 |
| | µ^{B}₁₀(mPa.s) | 4500 | 5000 | 5700 |
| | µ^{B}₁₀₀(mPa.s) | 1630 | 1940 | 2180 |
| T = 7 jours | µ^{B}₁₀(mPa.s) | 4600 | 5400 | 6100 |
| | µ^{B}₁₀₀(mPa.s) | 1670 | 1810 | 2010 |
| T = 1 mois | µ^{B}₁₀(mPa.s) | 4100 | 5300 | 5800 |
| | µ^{B}₁₀₀(mPa.s) | 1530 | 1810 | 1880 |

| | | | | |
|---|---|---|---|---|
| µ^{I} (P): viscosité TCI^{™} µ^{S}(K.U) : viscosité Stormer^{™} µ^{B}₁₀ (mPa.s) : viscosité Brookfield^{™} déterminée à 10 tours par minute µ^{B}₁₀₀ (mPa.s) : viscosité Brookfield^{™} déterminée à 100 tours par minute | | | | |

Les résultats du tableau 2 bis démontrent que les peintures formulées selon l'invention possèdent un comportement rhéologique amélioré par rapport à l'art antérieur : on observe une augmentation des viscosités ICI^{™} et Stormer^{™}. Cette amélioration conduit à une meilleure qualité d'application des peintures.

D'autre part, les viscosités Brookfield^{™} observées pour les peintures selon l'invention démontrent que ces formulations sont stables dans le temps.

D'autre part, un certain nombre de propriétés optiques ont été déterminées pour les peintures formulées selon les essais n° 9 à n° 11.

Le pouvoir couvrant humide PC des peintures formulées selon les essais n° 9 à n° 11 a été comparé visuellement sur des cartes de contrastes, immédiatement après application au moyen d'un tire-film manuel standard d'une épaisseur de 150 µm desdites peintures.

Les essais n° 10 et n° 11 selon l'invention, démontrent un pouvoir couvrant identique à celui obtenu pour l'essai n° 9 pris comme référence.

Les coordonnées chromatiques L et b figurant dans le tableau 3 appartiennent à l'espace chromatique (L, a, b, Hunter) et sont déterminées sur un film sec de la peinture à tester, préalablement appliquée au moyen d'un tire-film manuel standard en une épaisseur de 150 µm sur une plaque de verre, puis séchée à 23°C pendant 24 heures dans une enceinte climatique à un taux d'humidité de 50 %.

La valeur du rapport de contraste RC (%) = Yₙ/Y_{b} est mesurée sur un spectrocolorimètre Spectro-Pen^{™} commercialisé par la société DR LANGE^{™}. La peinture a été préalablement appliquée au moyen d'un tire-film manuel standard, en une épaisseur de 150 µm sur une carte de contraste. On mesure alors la valeur de la réflectance Y_{b} sur la partie blanche du substrat et la valeur de la réflectance Yₙ sur la partie noire du substrat. La valeur obtenue dans l'espace chromatique (X, Y, Z) est une moyenne réalisée sur trois mesures.

La brillance a été mesurée sur un réflectomètre Micro-Tri-Gloss^{™} commercialisé par la société BRANDT^{™} à des angles égaux à 60° et 85 ° (BS 60 et BS 85) selon la norme NF T 30-064. La peinture a été préalablement appliquée au moyen d'un tire-film manuel standard, en une épaisseur de 150 µm sur une plaque de verre.

**Tableau 3 : propriétés optiques mesurées sur les peintures formulées selon les essais n° 9 à n° 11**

| Propriétés optiques | Essai n° 9 | Essai n° 10 | Essai n° 11 |
|---|---|---|---|
| | (Art Antérieur) | (Invention) | (Invention) |
| PC | référence | identique à la référence | identique à la référence |
| L | 97,4 | 97,6 | 97,5 |
| b | 1,1 | 1,3 | 1,2 |
| RC (%) | 97,1 | 97,2 | 97,3 |
| BS 60 | 3,8 | 3,9 | 3,8 |
| BS 85 | 4,0 | 4,1 | 4,0 |

| | | | |
|---|---|---|---|
| PC: pouvoir couvrant humide estimé visuellement L : blancheur mesurée sur un spectrocolorimètre Spectro-Pen^{™} commercialisé par la société DR LANGE^{™} b : sous ton mesuré sur un spectrocolorimètre Spectro-Pen^{™} commercialisé par la société DR LANGE^{™} RC (%) : rapport de contraste mesuré sur un spectrocolorimètre Spectro-Pen^{™} commercialisé par la société DR LANGE^{™} BS 60, BS 85 : mesures de brillance à 60 et 85° réalisées sur un réflectomètre mètre Micro-Tri-Gloss^{™} commercialisé par la société BRANDT^{™}, selon la norme NF T 30-064 | | | |

Les résultats du tableau 3 démontrent que les propriétés optiques mesurées pour les peintures formulées selon l'invention sont équivalentes à celles de l'art antérieur.

Enfin, pour les essais n°9 à n°11, on a déterminé la compatibilité pigmentaire des peintures ainsi formulées, par la mesure du paramètre Delta E (ΔE).

La détermination de la valeur du Delta E (ΔE) de la formulation aqueuse colorée mate est effectuée par ajout, à la base blanche, de 5 % en poids de pigment noir, c'est-à-dire de 50 grammes de pigment noir (COLANYL^{™} Noir commercialisé par la société CLARIANT^{™}) dans 190 grammes de peinture blanche.

Ce test de mesure de ΔE est celui dénommé « essai de gommage au doigt », connu par l'homme du métier sous le vocable « rub out ».

Ce test consiste à appliquer sans cisaillement, à l'aide d'un filmographe, 150 µm de la formulation de la peinture mate ou satinée colorée à tester sur une carte de contraste, c'est-à-dire lentement et sans contrainte et à attendre 45 secondes puis à appliquer un cisaillement par frottement, avec le doigt, du film encore visqueux de peinture, pendant trente secondes en un endroit quelconque.

Après séchage du film, la différence colorimétrique entre la zone cisaillée (zone frottée) et la zone non cisaillée (zone du film non frotté) déterminée au moyen du spectrophotomètre Spectro-Pen^{™}, permet d'évaluer (valeur du ΔE) si la composition de peinture testée présente ou non une bonne compatibilité pigmentaire.

Les valeurs de ΔE déterminées pour les formulations colorées réalisées à partir des peintures correspondant aux essais n° 9, à n° 11 sont indiquées dans le tableau 4.

**Tableau 4 : valeurs de ΔE mesurées pour différentes formulations colorées réalisées à partir des bases blanches correspondant aux essais n° 9 à n° 11**

| Formulations colorées réalisées à partir de la base blanche de l'essai : | n° 9 | n° 10 | n° 11 |
|---|---|---|---|
| | (Art Antérieur) | (Invention) | (Invention) |
| ΔE | 0,5 | 0,5 | 0,4 |

Les valeurs du tableau 4 démontrent que la compatibilité pigmentaire des peintures colorées formulées selon l'invention reste identique à celle correspondant à l'essai selon l'art antérieur.

### Essai n° 12

Cet essai concerne la formulation d'une peinture mate, selon l'art antérieur, dans laquelle le carbonate est introduit uniquement sous forme de poudre sèche.

Il s'agit ici d'un mélange de 2 carbonates de calcium qui est du marbre provenant d'Avenza, l'un possédant un diamètre médian de 5 µm et l'autre un diamètre médian de 2 µm. Ils sont commercialisés par la société OMYA^{™} sous les noms respectifs de Omyacarb^{™} 5-AV et Omyacarb^{™} 2-AV.

Le liant utilisé est une émulsion vinylversatate commercialisé par la société CRAY VALLEY^{™} sous le nom Craymul^{™} 2336 XP.

### Essai n° 13

Cet essai concerne la formulation d'une peinture mate, selon l'invention.

Une partie du carbonate de calcium est introduite sous forme de poudre sèche : il s'agit d'un carbonate de calcium qui est du marbre d'Avenza, avec un diamètre médian de 2 µm. Il est commercialisé par la société OMYA^{™} sous le nom de Omyacarb^{™} 2-AV. L'autre partie est introduite sous forme de la suspension aqueuse selon l'invention et décrite dans l'essai n°1.

La liste des constituants ainsi que leurs proportions en poids sont indiquées dans le tableau 5, pour les peintures correspondant aux essais n° 12 et n° 13.

Pour les peintures correspondant à ces 2 essais, l'homme du métier a travaillé à masse constante de chaque constituant : à ce titre, la masse de carbonate de calcium est identique pour ces essais et égale à 500 g, celle de liant est identique et égale à 160 g.

**Tableau 5 : composition des peintures formulées selon les essais n°12 et n°13**

| Constituants | Essai n° 12 | Essai n° 13 |
|---|---|---|
| | (Art Antérieur) | (Invention) |
| Suspension de carbonate broyé selon l'essai n°1 | 0 | 570 |
| Omyacarb^{™} 5-AV | 300 | |
| Omyacarb^{™} 2-AV | 200 | 200 |
| Tiona^{™} RL 68 | 80,0 | 80,0 |
| Eau (ajoutée en plus) | 207,5 | 73,5 |
| Craymul^{™} 2336 XP | 160,0 | 25,0 |
| Coatex^{™} P90 | 4,0 | 4,0 |
| Mergal^{™} K6N | 2,0 | 2,0 |
| Nopco^{™} NDW | 1,0 | 1,0 |
| Butyldiglycol | 10,0 | 10,0 |
| White Spirit | 10,0 | 10,0 |
| Ammoniaque | 4,5 | 4,5 |
| Coatex Rheo 2000^{™} | 20,0 | 20,0 |
| Total | 1000,0 | 1000,0 |

| | | |
|---|---|---|
| Les chiffres désignent des masses en grammes. Tiona^{™} RL 68 désigne du dioxyde de titane commercialisé par la société MILLENNIUM^{™} Coatex^{™} P90 est un dispersant polyacrylique commercialisé par la société COATEX^{™} Mergal^{™} K6N est un bactéricide commercialisé par la société TROY^{™} Nopco^{™} NDW est un agent anti-mousse commercialisé par la société COGNIS^{™} Coatex Rheo 2000^{™} est un épaississant associatif commercialisé par la société COATEX^{™} | | |

Les valeurs des viscosités ICI^{™}, Stormer^{™} et Brookfield^{™}, mesurées à différents instants, pour les peintures formulées lors des essais n°12 et n°13 sont résumées dans le tableau 5 bis.

**Tableau 5 bis : viscosités mesurées sur les peintures formulées selon les essais n° 12 et n° 13**

| Viscosités | | Essai n°12 | Essai n°13 |
|---|---|---|---|
| | | (Art Antérieur) | (Invention) |
| T = 0 | µ^{I} (P) | 2,7 | 3,3 |
| | µ^{S}(K.U) | 84 | 100 |
| | µ^{B}₁₀(mPa.s) | 3000 | 4500 |
| | µ^{B}₁₀₀(mPa.s) | 1320 | 2010 |
| T = 24 heures | µ^{I} (P) | 2,7 | 3,2 |
| | µ^{S}(K.U) | 97 | 108 |
| | µ^{B}₁₀(mPa.s) | 4200 | 5000 |
| | µ^{B}₁₀₀(mPa.s) | 2150 | 2750 |
| T = 7 jours | µ^{B}₁₀(mPa.s) | 3400 | 3700 |
| | µ^{B}₁₀₀(mPa.s) | 1610 | 1790 |
| T = 1 mois | µ^{B}₁₀₀(mPa.s) | 3100 | 3400 |
| | µ^{B}₁₀₀(mPa.s) | 1410 | 1610 |

| | | | |
|---|---|---|---|
| µ^{I} (P) : viscosité ICI^{™} µ^{S}(K.U) : viscosité Stormer^{™} µ^{B}₁₀ (mPa.s) : viscosité Brookfield^{™} déterminée à 10 tours par minute µ^{B}₁₀₀ (mPa.s) : viscosité Brookfield^{™} déterminée à 100 tours par minute | | | |

Les résultats du tableau 5 bis démontrent que la peinture formulée selon l'invention possède un comportement rhéologique amélioré par rapport à l'art antérieur : on observe une augmentation des viscosités ICI^{™} et Stormer^{™}. Cette amélioration conduit à une meilleure qualité d'application des peintures.

D'autre part, les viscosités Brookfield^{™} observées pour la peinture selon l'invention démontrent que cette formulation est stable dans le temps.

### Essai n° 14

Cet essai concerne la formulation d'une peinture mate, selon l'art antérieur.

Une partie du carbonate de calcium est introduite sous forme de poudre sèche : il s'agit d'un carbonate de calcium qui est du marbre d'Avenza, avec un diamètre médian de 2 µm. Il est commercialisé par la société OMYA^{™} sous le nom de Omyacarb^{™} 2-AV.

L'autre partie est introduite sous forme d'une suspension aqueuse de carbonate de calcium broyé avec 0,3 % en poids sec d'un agent de broyage classique qui est un polyacrylate de sodium, ayant un diamètre médian de 5 µm, et une concentration en matière sèche égale à 75 % en poids par rapport au poids total de la suspension.

### Essai n° 15

Cet essai concerne la formulation d'une peinture mate, selon l'invention.
Une partie du carbonate de calcium est introduite sous forme de poudre sèche : il s'agit d'un carbonate de calcium qui est du marbre d'Avenza, avec un diamètre médian de 2 µm. Il est commercialisé par la société OMYA^{™} sous le nom de Omyacarb^{™} 2-AV.

L'autre partie est introduite sous forme de la suspension aqueuse selon l'invention et décrite dans l'essai n°8.

La liste des constituants ainsi que leurs proportions en poids sont indiquées dans le tableau 6, pour les peintures correspondant aux essais n° 14 et n° 15.

Pour les peintures correspondant à ces 2 essais, l'homme du métier a travaillé à masse constante de chaque constituant : à ce titre, la masse de carbonate de calcium est identique pour ces essais et égale à 500 g, celle de liant est identique et égale à 160 g.

**Tableau 6 : composition des peintures formulées selon les essais n° 14 et n° 15**

| Constituants | Essai n° 14 | Essai n° 15 |
|---|---|---|
| | (Art Antérieur) | (Invention) |
| Suspension de carbonate broyé selon l'essai n°8 | 0 | 497,4 |
| Suspension de carbonate broyé selon l'essai n° 14 | 400,0 | |
| Omyacarb^{™} 2-AV | 200,0 | 200,0 |
| Tiona^{™} RL 68 | 80,0 | 80,0 |
| Eau (ajoutée en plus) | 113,3 | 175,9 |
| Acronal^{™} 290 D | 160,0 | 0,0 |
| Mergal^{™} K6N | 2,0 | 2,0 |
| Nopco^{™} NDW | 2,0 | 2,0 |
| Butyldiglycol | 10,0 | 10,0 |
| White Spirit | 10,0 | 10,0 |
| Ammoniaque | 2,7 | 2,7 |
| Coatex Rheo 2000^{™} | 20,0 | 20,0 |
| Total | 1000,0 | 1000,0 |

| | | |
|---|---|---|
| Les chiffres désignent des masses en grammes. Tiona^{™} RL 68 désigne du dioxyde de titane commercialisé par la société MILLENNIUM^{™} Coatex^{™} P90 est un dispersant polyacrylique commercialisé par la société COATEX^{™} Mergal^{™} K6N est un bactéricide commercialisé par la société TROY^{™} Nopco^{™} NDW est un agent anti-mousse commercialisé par la société COGNIS^{™} Coatex Rheo 2000^{™} est un épaississant associatif commercialisé par la société COATEX^{™} | | |

Les valeurs des viscosités ICI^{™}, Stormer^{™} et Brookfield^{™}, mesurées à différents instants, pour les peintures formulées lors des essais n° 14 et n° 15 sont résumées dans le tableau 6 bis.

**Tableau 6 bis : viscosités mesurées sur les peintures formulées selon les essais n° 14 et n° 15**

| Viscosités | | Essai n°14 | Essai n°15 |
|---|---|---|---|
| | | (Art Antérieur) | (Invention) |
| T = 0 | µ^{I}(p) | 2,2 | 2,6 |
| | µ^{S}(K.U) | 89 | 93 |
| | µ^{B}₁₀(mPa.s) | 5500 | 6000 |
| | µ^{B}₁₀₀(mPa.s) | 1640 | 1890 |
| T = 24 heures | µ^{I} (P) | 2,3 | 2,7 |
| | µ^{S}(K.U) | 91 | 96 |
| | µ^{B}₁₀(mPa.s) | 5400 | 5900 |
| | µ^{B}₁₀₀(mPa.s) | 1800 | 2080 |
| T = 7 jours | µ^{B}₁₀ (mPa.s) | 5600 | 6000 |
| | µ^{B}₁₀₀(mPa.s) | 1800 | 2020 |
| T =1 mois | µ^{B}₁₀(mPa.s) | 5500 | 6000 |
| | µ^{B}₁₀₀(mPa.s) | 1650 | 2000 |

| | | | |
|---|---|---|---|
| µ^{I} (P) : viscosité ICI^{™} µ^{S}(K.U) : viscosité Stormer^{™} µ^{B}₁₀ (mPa.s) : viscosité Brookfield^{™} déterminée à 10 tours par minute µ^{B}₁₀₀ (mPa.s) : viscosité Brookfield^{™} déterminée à 100 tours par minute | | | |

Les résultats du tableau 6 bis démontrent que la peinture formulée selon l'invention possède un comportement rhéologique amélioré par rapport à l'art antérieur : on observe une augmentation des viscosités ICI^{™} et Stormer^{™}. Cette amélioration conduit à une meilleure qualité d'application des peintures.

D'autre part, les viscosités Brookfield^{™} observées pour la peinture selon l'invention démontrent que cette formulation est stable dans le temps.

### Exemple 3

Cet exemple concerne la fabrication de suspensions aqueuses de matières minérales à travers un procédé de broyage, en présence de liants, selon l'invention. Il concerne aussi les suspensions de matières minérales ainsi obtenues, à partir du procédé de broyage selon l'invention.

Dans l'essai n° 16, on utilise un carbonate de calcium précipité, et qui présente un diamètre médian initial noté d₅₀ égal à 4,8 µm (50 % des particules de carbonate de calcium possèdent un diamètre inférieur ou égal à 4,8 µm). Il est commercialisé par la société SOLVAY^{™} sous le nom Socal^{™} P3.

Dans les essais n° 17 et 18, on utilise un carbonate de calcium qui est du marbre provenant d'Avenza (Italie), et qui présente un diamètre médian initial noté d₅₀ égal à 10 µm (50 % des particules de carbonate de calcium possèdent un diamètre inférieur ou égal à 10 µm). Il est commercialisé par la société OMYA^{™} sous le nom Omyacarb^{™} 10 AV.

Les matières minérales sont broyées selon l'invention en présence d'un liant (cas des essais n° 16 et 17) ou d'un mélange de deux liants (essai n° 18) selon la même méthode que celle décrite pour l'exemple 1.

Pour les essais n° 16 à 18, la granulométrie des suspensions aqueuses est déterminée, après broyage, de la même manière que celle décrite pour l'exemple 1.
On détermine ensuite, selon la même méthode que celle employée au cours de l'exemple 1, les viscosités Brookfield^{™} à deux vitesses de rotation de 10 et 100 tours par minute -respectivement notées µ₁₀ et µ₁₀₀- et ce, aux instants t = 0 et t = 8 jours après une minute d'agitation.

### Essai n° 16

Cet essai illustre l'invention et met en oeuvre 20,0 % en poids sec par rapport au poids sec de charge minérale, d'un liant styrène-acrylique commercialisé par la société CRAY VALLEY^{™} sous le nom Craymul^{™} 5432. Il met également en oeuvre 58,3 % en poids sec par rapport au poids total de la suspension du carbonate de calcium précipité Socal^{™} P3, et le reste d'eau.

### Essai n° 17

Cet essai illustre l'invention et met en oeuvre 20,0 % en poids sec par rapport au poids sec de charge minérale, d'un liant acrylique commercialisé par la société CRAY VALLEY^{™} sous le nom Craymul^{™} 4511. Il met également en oeuvre 58,4 % en poids sec par rapport au poids total de la suspension du carbonate de calcium d'Avenza, et le reste d'eau.

### Essai n° 18

Cet essai illustre l'invention et met en oeuvre 20,0 % en poids sec par rapport au poids sec de charge minérale, d'un mélange de liants composé d'Acronal^{™} DL 966 et d'Acronal^{™} S 360 D (dans un ratio 1 :1 en poids), qui sont respectivement des liants du type styrène-butadiène et styrène-acrylique, tous deux commercialisés par la société BASF^{™}. Il met également en oeuvre 63,1 % en poids sec du carbonate de calcium d'Avenza par rapport au poids total de la suspension, et le reste d'eau.

Les valeurs des diamètres médians d₅₀ déterminés après broyage, ainsi que les valeurs des viscosités Brookfield^{™} µ₁₀ et µ₁₀₀, mesurées après broyage aux instants t = 0 et t = 8 jours après une minute d'agitation, sont indiquées dans le tableau 7.

**Tableau 7 : diamètre médian d₅₀ après broyage, et viscosités Brookfield^{™} µ₁₀ et µ₁₀₀, après broyage (aux instants t = 0 et t = 8 jours après une minute d'agitation).**

| **Essai n°** | | **16** | **17** | **18** |
|---|---|---|---|---|
| **Carbonate de calcium** (% en poids sec par rapport au poids total de la suspension) | | 58,3 | 58,4 | 63,1 |
| **Liant** (% en poids sec par rapport au poids sec de charge) | | 20 % | 20 % | 20 % |
| d₅₀ (µm) | | 2,3 | 6,0 | 5,0 |
| **Viscosité à** **T = 0** | µ₁₀ (mPa.s) | 5540 | 790 | 640 |
| | µ₁₀₀(mPa.s) | 800 | 410 | 200 |
| **Viscosité à** **T = 8 jours** | µ₁₀(mPa.s) | 2410 | 850 | 90 |
| | µ₁₀₀(mPa.s) | 560 | 290 | 90 |

Les diamètres médians correspondant aux essais n° 16 à n° 18 démontrent que, pour le procédé selon l'invention, les liants utilisés se comportent bel et bien comme des agents d'aide au broyage, au sens où on observe une diminution notable de la taille des particules de carbonate de calcium.

Enfin, on constate que chaque suspension obtenue selon l'invention est stable dans le temps.

### Exemple 4

Cet exemple illustre l'invention et concerne la fabrication d'un crépi, d'un enduit et d'une colle selon l'invention.

### Essai n° 19

Cet essai illustre l'invention et concerne la fabrication d'un crépi selon l'invention.
Pour ce faire, on réalise donc un crépi, selon les méthodes bien connues de l'homme du métier, et dont la composition est donnée dans le tableau 8.
Cet essai met notamment en oeuvre la suspension aqueuse de matière minérale broyée selon l'invention, et obtenue au cours de l'essai n° 16.

**Tableau 8 : composition d'une formulation crépi selon l'invention**

| **Constituants** | **Poids (g)** |
|---|---|
| Suspension aqueuse de matière minérale selon l'essai n° 16 | 339,6 |
| Eau | 18,9 |
| Coatex^{™} P90 | 3,0 |
| Mergal^{™} K6N | 2,0 |
| TiO2 RL68 | 60,0 |
| Durcal^{™} 130 | 110,0 |
| Craymul^{™} 5432 | 134,0 |
| Monoéthylèneglycol | 10,0 |
| White Spirit | 10,0 |
| Granicalcium^{™} | 300,0 |
| Ammoniaque | 2,5 |
| Viscoatex^{™} 46 | 20,0 |

| | |
|---|---|
| Coatex^{™} P90 est un dispersant acrylique commercialisé par la société COATEX^{™} Mergal^{™} K6N est un biocide commercialisé par la société TROY^{™} TiO2 RL 68 est du dioxyde de titane commercialisé par la société MILLENIUM^{™} Durcal^{™} 130 est un carbonate de calcium commercialisé par la société OMYA^{™} Craymul^{™} 5432 est liant styrène-acrylique commercialisé par la société CRAY VALLEY^{™} Viscoatex^{™} 46 est un épaississant acrylique commercialisé par la société COATEX^{™} | |

On obtient ainsi une formulation, dont les viscosités Brookfield^{™} mesurées à 1,10 et 100 tours par minute (selon les méthodes précédemment décrites), sont respectivement égales, à l'instant t = 0, à :
980 000 mPa.s, 120 000 mPa.s, 18 500 mPa.s.

Ces viscosités, mesurées à l'instant t = 24 heures, sont respectivement égales à :
810 000 mPa.s, 115 000 mPa.s, 17 200 mPa.s.

Ces valeurs démontrent que les viscosités Brookfield^{™} obtenues sont parfaitement compatibles avec une utilisation de la formulation selon l'invention dans le domaine des crépis.

### Essai n° 20

Cet essai illustre l'invention et concerne la fabrication d'un enduit selon l'invention.
Pour ce faire, on réalise donc un enduit, selon les méthodes bien connues de l'homme du métier, et dont la composition est donnée dans le tableau 9.
Cet essai met notamment en oeuvre la suspension aqueuse de matière minérale broyée selon l'invention, et obtenue au cours de l'essai n° 16.

**Tableau 9 : composition d'une formulation d'enduit selon l'invention**

| **Constituants** | **Poids (g)** |
|---|---|
| Suspension aqueuse de matière minérale selon l'essai n° 16 | 82,2 |
| Eau | 358,0 |
| Cortex^{™} P90 | 3,0 |
| Nopco^{™} NDW | 2,0 |
| Mergal^{™} K6N | 0,6 |
| Socal^{™} P3 | 364,0 |
| Myanit^{™} | 120,0 |
| Soude | 24,0 |
| Viscoatex^{™} 46 | 76,2 |

| | |
|---|---|
| Coatex^{™} P90 est un dispersant acrylique commercialisé par la société COATEX^{™} Nopco NDW est un antimousse commercialisé par la société COGNIS^{™} Mergal^{™} K6N est un biocide commercialisé par la société TROY^{™} Myanit^{™} est un carbonate de calcium commercialisé par la société OMYA^{™} Viscoatex^{™} 46 est un épaississant acrylique commercialisé par la société COATEX^{™} | |

On obtient ainsi une formulation, dont les viscosités Brookfield^{™} mesurées à 1, 10 et 100 tours par minute (selon les méthodes précédemment décrites mais dans ce cas, avec un module de type Hélipath^{™}), sont respectivement égales, à l'instant t= 0, à :
590 000 mPa.s, 88 000 mPa.s, 31 000 mPa.s.
Ces viscosités, mesurées à l'instant t = 24 heures, sont respectivement égales à :
410 000 mPa.s, 66 000 mPa.s, 25 500 mPa.s.

Ces valeurs démontrent que les viscosités Brookfield^{™} obtenues sont parfaitement compatibles avec une utilisation de la formulation selon l'invention dans le domaine des enduits.

### Essai n° 21

Cet essai illustre l'invention et concerne la fabrication d'une colle selon l'invention.
Pour ce faire, on réalise donc une colle, selon les méthodes bien connues de l'homme du métier, et dont la composition est donnée dans le tableau 10.
Cet essai met notamment en oeuvre la suspension aqueuse de matière minérale broyée selon l'invention, et obtenue au cours de l'essai n° 16.

**Tableau 10 : composition d'une formulation de colle selon l'invention**

| **Constituants** | **Poids (g)** |
|---|---|
| Suspension aqueuse de matière minérale selon l'essai n° 16 | 205,8 |
| Mergal^{™} K6N | 2,0 |
| Nopco^{™} NDW | 1,0 |
| Craymul^{™} 5432 | 120,0 |
| Durcal^{™} 2 | 140,0 |
| Durcal^{™} 130 | 524,4 |
| Butyldiglycol | 14,0 |
| Eau | 32,2 |
| Ammoniaque | 10,0 |
| Viscoatex^{™} 46 | 71,6 |

| | |
|---|---|
| Mergal^{™} K6N est un biocide commercialisé par la société TROY^{™} Nopco^{™} NDW est un antimousse commercialisé par la société COGNIS^{™} Craymul^{™} 5432 est liant styrène-acrylique commercialisé par la société CRAY VALLEY^{™} Durcal^{™} 2 et Durcal^{™} 130 sont des carbonates de calcium commercialisés par la société OMYA^{™} Viscoatex^{™} 46 est un épaississant acrylique commercialisé par la société COATEX^{™} | |

On obtient ainsi une formulation, dont les viscosités Brookfield^{™} mesurées à 1,10 et 100 tours par minute (selon les méthodes précédemment décrites mais dans ce cas, avec un module de type Hélipath^{™}), sont respectivement égales, à l'instant t = 0, à :
450 000 mPa.s, 270 000 mPa.s, 51 000 mPa.s.
Ces viscosités, mesurées à l'instant t = 24 heures, sont respectivement égales à :
1 100 000 mPa.s, 340 000 mPa.s, 85 000 mPa.s.

Ces valeurs démontrent que les viscosités Brookfield^{™} obtenues sont parfaitement compatibles avec une utilisation de la formulation selon l'invention dans le domaine des colles.

## Revendications

1. Procédé de fabrication d'une suspension stable de matières minérales qui sont un carbonate de calcium synthétique ou un carbonate de calcium naturel choisi parmi le marbre, la calcite, la craie ou leurs mélanges dans l'eau, **caractérisé en ce que** lesdites matières minérales sont broyées en présence de liants, et sans agent dispersant.

2. Procédé selon la revendication 1 **caractérisé en ce que** les liants sont choisis parmi les liants de type vinyl éthylène, vinyl versatate, styrène acrylique, styrène butadiène ou encore acrylique.

3. Procédé selon la revendication 2 **caractérisé en ce que** les liants sont choisis parmi les liants de type vinylversatate et acrylique.

4. Procédé selon l'une des revendications 1 à 3 **caractérisé en ce qu'**il est de plus mis en oeuvre au moins un agent d'aide au broyage.

5. Procédé selon l'une des revendications 1 à 4 **caractérisé en ce qu'**il met en oeuvre au moins 15 % en poids sec de carbonate de calcium synthétique ou de carbonate de calcium naturel choisi parmi le marbre, la calcite, la craie ou leurs mélanges, par rapport au poids total de la suspension aqueuse, de 10 % à 50 % en poids sec de liants par rapport au poids total de la suspension aqueuse, et de 0 à 5 % en poids sec d'agents d'aide au broyage par rapport au poids total de la suspension aqueuse.

6. Procédé selon la revendication 5 **caractérisé en ce qu'**il met en oeuvre au moins 50 % en poids sec de carbonate de calcium synthétique ou de carbonate de calcium naturel choisi parmi le marbre, la calcite, la craie ou leurs mélanges, par rapport au poids total de la suspension aqueuse, de 10 % à 50 % % en poids sec de liants par rapport au poids total de la suspension aqueuse, et de 0 à 2 % en poids sec d'agents d'aide au broyage par rapport au poids total de la suspension aqueuse.

7. Procédé selon la revendication 6 **caractérisé en ce qu'**il met en oeuvre au moins 50 % en poids sec de carbonate de calcium synthétique ou de carbonate de calcium naturel choisi parmi le marbre, la calcite, la craie ou leurs mélanges, par rapport au poids total de la suspension aqueuse, de 10 % à 25 % % en poids sec de liants par rapport au poids total de la suspension aqueuse, et ne met pas en oeuvre d'agents d'aide au broyage.

## Claims

1. A method for manufacturing a stable suspension of mineral matter, which are a synthetic calcium carbonate or a natural calcium carbonate chosen from among marble, calcite, chalk, and a blend thereof, **characterized in that** said mineral matter is ground up in the presence of binders, and without dispersing agents.

2. A method according to claim 1, **characterized in that** the binders are selected from the binders consisting of the vinyl ethylene, vinyl versatate, styrene acrylic, styrene butadiene and acrylic types.

3. A method according to claim 2, **characterized in that** the binders are selected from the binders consisting of the vinyl versatate and acrylic types.

4. A method according to any of claims 1 to 3 **characterized in that,** in addition, at least one grinding aid agent is used.

5. A method according to any of claims 1 to 4 **characterized in that** at least 15% by dry weight of synthetic calcium carbonate or a natural calcium carbonate chosen from among marble, calcite, chalk, and a blend thereof, relative to the total weight of the aqueous suspension, 10% to 50% by dry weight of binders relative to the total weight of the aqueous suspension, and 0 to 5% by dry weight of grinding aid agents relative to the total weight of the aqueous suspension are used.

6. A method according to claim 5, **characterized in that** at least 50% by dry weight of synthetic calcium carbonate or a natural calcium carbonate chosen from among marble, calcite, chalk, and a blend thereof, relative to the total weight of the aqueous suspension, 10% to 50% by dry weight of binders relative to the total weight of the aqueous suspension, and 0 to 2% by dry weight of grinding aid agents relative to the total weight of the aqueous suspension are used.

7. A method according to claim 6, **characterized in that** at least 50% by dry weight of synthetic calcium carbonate or a natural calcium carbonate chosen from among marble, calcite, chalk, and a blend thereof, relative to the total weight of the aqueous suspension; 10% to 25% by dry weight of binders relative to the total weight of the aqueous suspension; and no grinding aid agents are used.

## Patentansprüche

1. Verfahren zur Herstellung einer stabilen Suspension von Mineralstoffen, welche ein synthetisches Calciumcarbonat oder ein natürliches Calciumcarbonat, gewählt unter Marmor, Calcit, Kreide oder deren Mischungen im Wasser, sind, **dadurch gekennzeichnet, dass** die besagten Mineralstoffe unter Vorhandensein von Bindemitteln und ohne Dispersionsmittel gemahlen werden.

2. Verfahren nach Anspruch 1, **dadurch gekennzeichnet, dass** die Bindemittel unter Bindemitteln vom Typ Vinylethylen, Vinylversatat, Acrylstyrol, Butadienstyrol oder auch Acryl gewählt werden.

3. Verfahren nach Anspruch 2, **dadurch gekennzeichnet, dass** die Bindemittel unter Bindemitteln vom Typ Vinylversatat und Acryl gewählt werden.

4. Verfahren nach einem der Ansprüche 1 bis 3, **dadurch gekennzeichnet, dass** zusätzlich mindestens ein Mahlhilfsstoff verwendet wird.

5. Verfahren nach einem der Ansprüche 1 bis 4, **dadurch gekennzeichnet, dass** im Verhältnis zum Gesamtgewicht der wässrigen Suspension mindestens 15 Trockengewichtprozent synthetisches Calciumcarbonat oder natürliches Calciumcarbonat, welches unter Marmor, Calcit, Kreide oder deren Mischungen gewählt wird, zwischen 10 und 50 Trockengewichtprozent Bindemittel und zwischen 0 und 5 Trockengewichtprozent Mahlhilfsstoffe verwendet werden.

6. Verfahren nach Anspruch 5, **dadurch gekennzeichnet, dass** im Verhältnis zum Gesamtgewicht der wässrigen Suspension mindestens 50 Trockengewichtprozent synthetisches Calciumcarbonat oder natürliches Calciumcarbonat, welches unter Marmor, Calcit, Kreide oder deren Mischungen gewählt wird, zwischen 10 und 50 Trockengewichtprozent Bindemittel und zwischen 0 und 2 Trockengewichtprozent Mahlhilfsstoffe verwendet werden.

7. Verfahren nach Anspruch 6, **dadurch gekennzeichnet, dass** im Verhältnis zum Gesamtgewicht der wässrigen Suspension mindestens 50 Trockengewichtprozent synthetisches Calciumcarbonat oder natürliches Calciumcarbonat, welches unter Marmor, Calcit, Kreide oder deren Mischungen gewählt wird, und zwischen 10 und 25 Trockengewichtprozent Bindemittel verwendet werden, und **dadurch**, dass keine Mahlhilfsstoffe verwendet werden.
